# EUROPEAN PATENT SPECIFICATION

(11) **EP 3 126 962 B1**
(45) Date of publication and mention of the grant of the patent: **04.09.2019**
(21) Application number: 15716296.7
(22) Date of filing: 27.03.2015
(51) Int. Cl.: G06F 9/451, G06F 3/048

(54) **SCALABLE USER INTERFACE DISPLAY**
SKALIERBARE BENUTZERSCHNITTSTELLENANZEIGE
AFFICHAGE D'INTERFACE UTILISATEUR POUVANT ÊTRE MISE À L'ÉCHELLE

(30) Priority: 01.04.2014 US 201461973678 P; 22.07.2014 US 201414338078
(43) Date of publication of application: 08.02.2017
(73) Proprietor: Microsoft Technology Licensing, LLC, Redmond, WA 98052-6399 (US)
(72) Inventor: KAUFTHAL, Jonathan, Redmond, Washington 98052-6399 (US); SPOMER, Travis, Redmond, Washington 98052-6399 (US); RODRIG, Maya, Redmond, Washington 98052-6399 (US); KIKIN-GIL, Erez, Redmond, Washington 98052-6399 (US); WALKER, Charles Scott, Redmond, Washington 98052-6399 (US); YEH, Han-Wen, Redmond, Washington 98052-6399 (US)
(74) Representative: Grünecker Patent- und Rechtsanwälte PartG mbB
(86) International application number: PCT/US2015/022887
(87) International publication number: WO 2015/153314

(56) References cited:
- EP-A2- 1 174 787

## Description

### BACKGROUND

Software applications used for preparing and processing rich text documents provide a platform to enable users to write, calculate, organize, prepare presentations, send and receive electronic mail, compose music, and the like. For example, modern electronic word processing applications allow users to prepare a variety of useful documents. Modern spreadsheet applications allow users to enter, manipulate, and organize data. Modern electronic slide presentation applications allow users to create a variety of slide presentations containing text, pictures, data or other useful objects. Such applications may be used on devices of all shapes and sizes.

EP 1 174 787 A2 relates to scaling icons in a data processing system. The number of icons to be displayed on the computer screen is determined. The boundary area for displaying the icons on the computer screen is calculated. The sizes of the icons are then scaled to a size that allows all icons to be displayed in the boundary area while utilizing all available display space. The minimum and maximum sizes of the icons cannot be scaled to fit within the boundary area using the user selected minimum size, then only a portion of the icon is displayed. In this manner, all icons are scaled and displayed at a size that utilizes the full boundary area of the display screen.

It is the object of the present invention to provide an improved method and system for displaying content on a display screen.

This object is solved by the subject matter of the independent claims.

Embodiments are defined by the dependent claims.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Embodiments of the present disclosure relate to displaying a scalable integrated application user interface. The user interface may be a functional landscape of an application that accommodates and displays, substantially in-line and in various combinations, multiple regions of application functional controls and information. In some embodiments, a first region displays a plurality of selectable functionality groupings, a second region displays document information, and a third region displays a plurality of individual functional controls. The user interface may detect a change in available screen space for the application and adjust the functional landscape accordingly.

According to an aspect of the disclosure, a method for displaying a user interface at a display device includes arranging multiple regions of application functionalities and information; identifying an amount of space available to the user interface; comparing the amount of available application space with an amount of space used by the multiple regions of application functionalities and information; and adjusting the visual display of at least one of the multiple regions of application functionalities and information according to one or more predetermined scaling priorities to accommodate the available space within the designated area of the application.

According to an aspect of the disclosure, a system includes an application executed at least in part by a computing device, the computing device comprising at least one processor, a memory for containing computer-executable instructions, which when executed by the at least one processor, cause the computing device to perform a method comprising arranging multiple regions of application functionalities and information for display substantially in-line within a designated area of an application, identifying an amount of space available to the user interface within the designated area of the application, comparing the amount of available application space with an amount of space used by the multiple regions of application functionalities and information, and adjusting a visual display of at least one of the multiple regions of application functionalities and information according to one or more predetermined scaling priorities to accommodate the available space within the designated area of the application.

### DESCRIPTION OF THE DRAWINGS

The use of the same reference numbers in different instances in the description and the figures may indicate similar or identical items. Non-limiting and non-exhaustive embodiments are described with reference to the following Figures in which:
FIG. 1 is a block diagram showing the architecture of a personal computer that provides an illustrative operating environment for embodiments of the disclosure.
FIG. 2 is a flow diagram of a method for providing a scalable user interface according to embodiments of the disclosure.
FIG. 3 is an illustration of a computer screen display showing an in-line user interface according to embodiments of the disclosure.
FIG. 4 illustrates a partial computer screen display showing an in-line user interface including a ribbon command region and an informational region.
FIG. 5 illustrates a partial in-line user interface including a ribbon command region and a search entry point.
FIG. 6 illustrates a partial in-line user interface including a syncing function.
FIG. 7 illustrates a partial in-line user interface including a quick command region.
FIG. 8 illustrates a partial in-line user interface including a toolbar.
FIGS. 9A-9D illustrate scaling of an in-line user interface.
FIGS. 10A-10C illustrate computer screens showing embodiments of an in-line user interface including one or more expanded or minimized elements.
FIG. 11 illustrates a computer screen showing an embodiment of the in-line user interface within a spreadsheet application.
FIG. 12 is a block diagram illustrating example physical components of a computing device with which embodiments of the disclosure may be practiced.
FIGS. 13A and 13B are simplified block diagrams of a mobile computing device with which embodiments of the present disclosure may be practiced.
FIG. 14 is a simplified block diagram of a distributed computing system in which embodiments of the present disclosure may be practiced.

### DETAILED DESCRIPTION

Embodiments of the present disclosure relate to displaying a scalable integrated application user interface. The user interface may be a functional landscape of an application that accommodates and displays, substantially in-line and in various combinations, multiple regions of application functional controls and information. In some embodiments, a first region displays a plurality of selectable functionality groupings, a second region displays document information, and a third region displays a plurality of individual functional controls. The user interface may detect a change in available screen space for the application and may adjust the functional landscape accordingly.

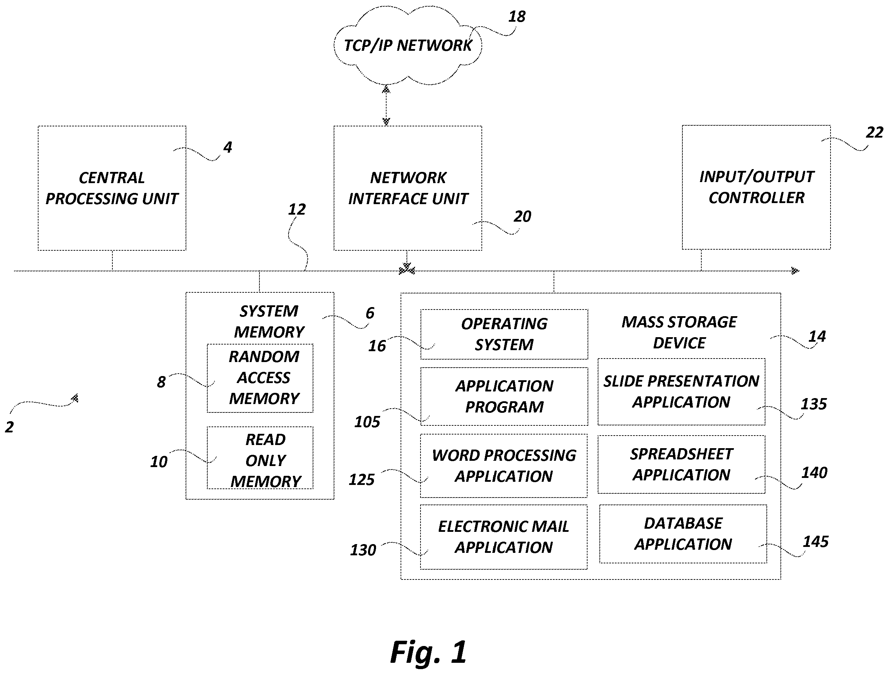

Referring now to the drawings, in which like numerals represent like elements through the several figures, aspects of the present invention and the exemplary operating environment will be described. FIG. 1 and the following discussion are intended to provide a brief, general description of a suitable computing environment in which the invention may be implemented. While the invention will be described in the general context of program modules that execute in conjunction with an application program that runs on an operating system on a personal computer, those skilled in the art will recognize that the invention may also be implemented in combination with other program modules.

Generally, program modules include routines, programs, components, data structures, and other types of structures that perform particular tasks or implement particular abstract data types. Moreover, those skilled in the art will appreciate that the invention may be practiced with other computer system configurations, including hand-held devices, multiprocessor systems, microprocessor-based or programmable consumer electronics, minicomputers, mainframe computers, and the like. The invention may also be practiced in distributed computing environments where tasks are performed by remote processing devices that are linked through a communications network. In a distributed computing environment, program modules may be located in both local and remote memory storage devices.

Turning now to FIG. 1, an illustrative computer architecture for a personal computer 2 for practicing the various embodiments of the invention will be described. The computer architecture shown in FIG. 1 illustrates a conventional personal computer, including a central processing unit 4 ("CPU"), a system memory 6, including a random access memory 8 ("RAM") and a read-only memory ("ROM") 10, and a system bus 12 that couples the memory to the CPU 4. A basic input/output system containing the basic routines that help to transfer information between elements within the computer, such as during startup, may be stored in the ROM 10. The personal computer 2 may further include a mass storage device 14 for storing an operating system 16, application programs, such as the application program 205, and data.

The mass storage device 14 may be connected to the CPU 4 through a mass storage controller (not shown) connected to the bus 12. The mass storage device 14 and its associated computer-readable media may provide non-volatile storage for the personal computer 2. Although the description of computer-readable media contained herein refers to a mass storage device, such as a hard disk or CD-ROM drive, it should be appreciated by those skilled in the art that computer-readable media can be any available media that can be accessed by the personal computer 2.

According to various embodiments of the disclosure, the personal computer 2 may operate in a networked environment using logical connections to remote computers through a TCP/IP network 18, such as the Internet. The personal computer 2 may connect to the TCP/IP network 18 through a network interface unit 20 connected to the bus 12. It should be appreciated that the network interface unit 20 may also be utilized to connect to other types of networks and remote computer systems. The personal computer 2 may also include an input/output controller 22 for receiving and processing input from a number of devices, including a keyboard or mouse (not shown). Similarly, an input/output controller 22 may provide output to a display screen, a printer, or other type of output device.

As mentioned briefly above, a number of program modules and data files may be stored in the mass storage device 14 and RAM 8 of the personal computer 2, including an operating system 16 suitable for controlling the operation of a networked personal computer, such as the WINDOWS operating systems from Microsoft Corporation of Redmond, Wash. The mass storage device 14 and RAM 8 may also store one or more application programs. In particular, the mass storage device 14 and RAM 8 may store an application program 105 for providing a variety of functionalities to a user. For instance, the application program 105 may comprise many types of programs such as a word processing application, a spreadsheet application, a desktop publishing application, and the like. According to some embodiments, the application program 105 may comprise a multiple functionality software application for providing word processing functionality, slide presentation functionality, spreadsheet functionality, database functionality and the like. Some of the individual program modules comprising the multiple functionality application 105 may include a word processing application 125, an electronic mail application 130 a slide presentation application 135, a spreadsheet application 140 and a database application 145.

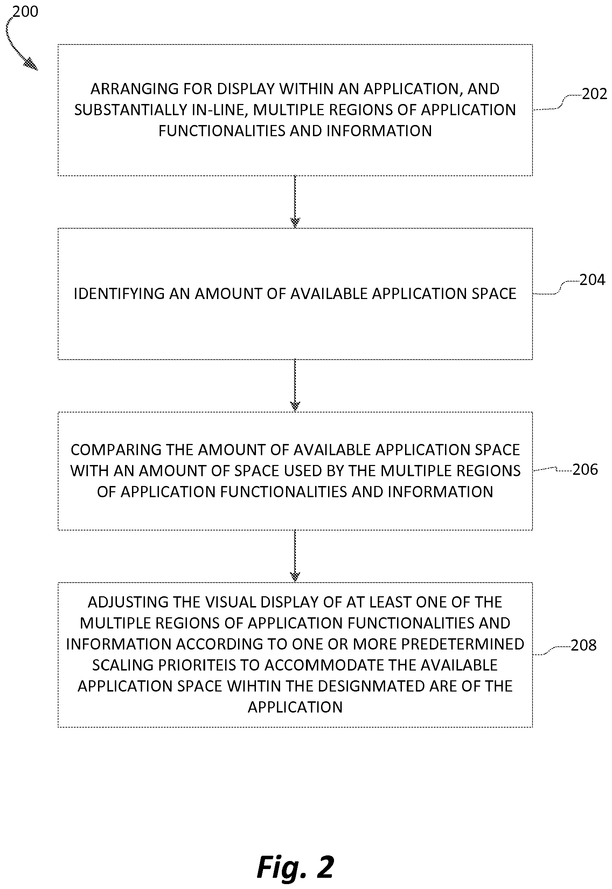

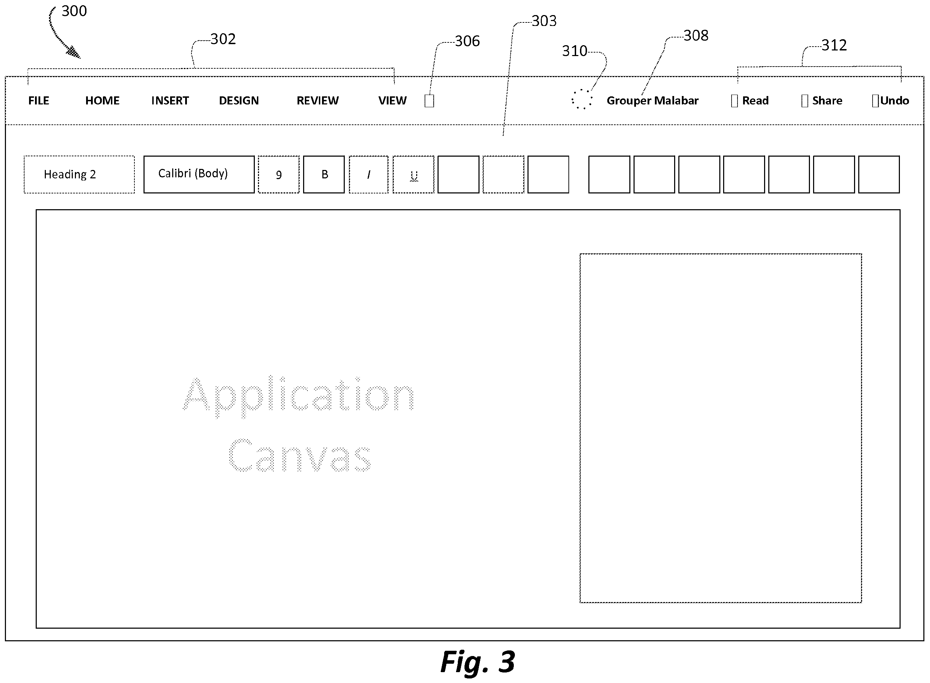

The following discussion describes an example procedure for displaying and scaling an in-line (e.g. integrated into one row or one column) user interface of the present disclosure. In portions of the following discussion, reference will be made to the environments depicted above in FIG. 1. In at least some embodiments, aspects of the procedures may be displayed via one or more of the entities discussed above, such as personal computer 2 of FIG. 1. However, references to specific elements above are for illustrative purposes only, and do not limit the disclosure to the embodiments described herein. The process described below is further illustrated in FIG. 2, where aspects of the example embodiments are depicted in a flow diagram that describes operations in one or more processes in accordance with one or more embodiments. The process described below is further illustrated in FIGS. 3-12, where aspects of example embodiments are provided in illustrations that depict operations in one or more processes in accordance with one or more embodiments.

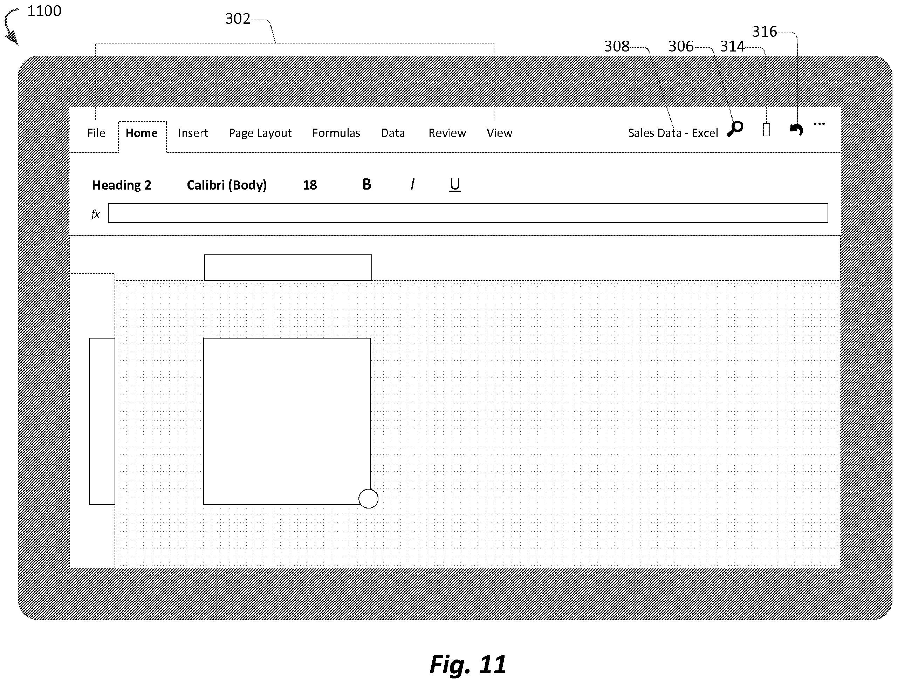

FIG. 2 is a flow diagram of a method 200 for providing a scalable in-line user interface according to embodiments of the disclosure. Method 200 may begin at operation 202, where multiple regions of application functionalities and information are arranged for display substantially in-line within a designated area of an application. FIG. 3 is an illustration of a computer screen display showing an in-line user interface 300 for displaying task-based top-level functionality tabs in-line with additional interactive and informational elements of an application. In FIG. 3, the application is a word processing application. In some embodiment, the user interface further includes a ribbon 303. The ribbon 303 includes at least some selectable controls and/or commands (i.e., font size, spacing, cut, paste, etc.) as illustrated in FIG. 3. In some embodiments, the ribbon 303 is also substantially in-line. The ribbon 303 and the designated area displaying application functionalities and information substantially in-line on the user interface 300 are separate and distinct from each other. However, in some embodiments, a user selection of an application functionality in the designated area of the user interface affects the layout of the ribbon 303. FIG. 11 illustrates a computer screen showing an embodiment 1100 of the in-line user interface within a spreadsheet application, which may provide similar functionality and information.

According to some embodiments of the disclosure, top-level functionality tabs, interactive elements, informational elements, generic commands and/or other application elements may be integrated into one row or column, providing a compact region of functionality and information. The in-line user interface 300 may also display as a top-level common landscape or region of the application, such that the interface elements may not change substantially from one document to another when opened in the application using a particular device. That is, for a given device size, screen size, or width available to the application within the screen, the in-line user interface may display in substantially the same manner for each document. Thus, visual consistency for the interface 300 may be maintained, allowing users to develop familiarity with the application and its corresponding available functions as they are displayed on multiple devices. In further embodiments, the in-line user interface 300 may provide a consistent display across a plurality of related applications (e.g., a suite of applications). Additionally, the in-line user interface maximizes available application canvas space by adjusting displayed elements depending on, for instance, device, screen size, or width available to the application within the screen. As will be discussed in detail, the interface 300 may employ one or more scaling techniques to appropriately size the display of one or more elements of the interface 300 to accommodate changes in available application space. While the in-line user interface 300 is shown at the top of the application, the interface 300 may display in any suitable region of the application, including horizontally along either side or at the bottom of the application.

Example regions of an in-line user interface 300 according to an embodiment of the disclosure are described below. Where space is available, all or most of the regions may be arranged for display. As will also be discussed in further detail below, prior to display of any of the below described regions, the interface 300 may identify an amount of available space and make adjustments accordingly. For ease of description of one or more subsequent steps of the method 200, a description of the regions is provided first.

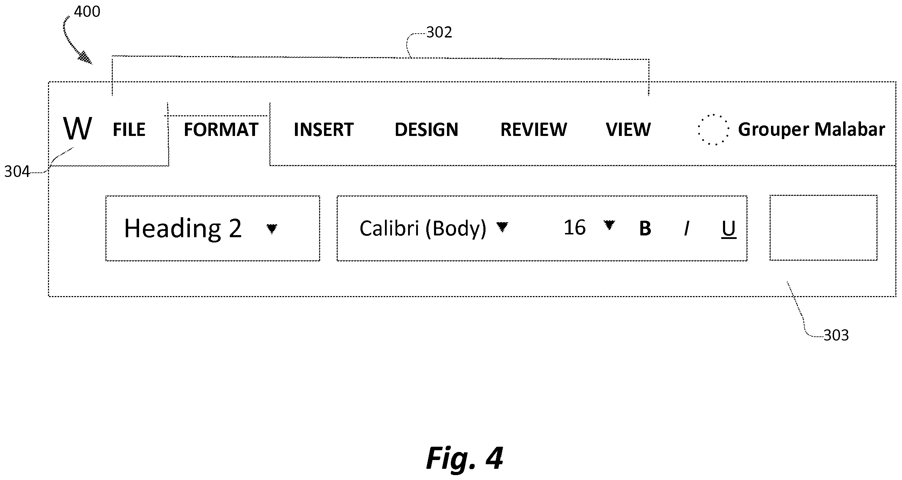

As shown in FIG. 3, in some embodiments, user interface 300 may include a ribbon command region 302 displaying a top-level ribbon command user interface including selectable controls associated with task-based functionality available under a given software application, such as the software application 105 illustrated in FIG. 1. FIG. 4 illustrates a partial in-line user interface 400 including a ribbon command region 302 and an informational region 304. The ribbon command region 302 may be provided in-line with other displayed elements of the user interface 300 and may include a ribbon 303 or ribbon interface. Generally speaking, the first region 302 may be a task-based tab section. The tab section may include top-level selectable tabs associated with task-based functionality provided by a given software application. For instance, one or more tabs may be labeled "file," "home," "insert," "design," "review" and "view." Embodiments are not limited to these example tab labels, and it should be appreciated that any number of tabs may be included in an initial or adjusted display of the in-line user interface 300.

As mentioned above, the user interface 300 of the present disclosure may also include an informational region 304 displaying product information. The first informational region 304 may display, for example a brand or product name, an icon representing a logo for a brand or product name, or any other such element. As shown in FIG. 4, an application icon is displayed in the informational region 304. Display of the informational region 304 may be in-line with other displayed elements of the user interface 300. In some embodiments, the informational region 304 is adjacent to the ribbon command region 302. In other embodiments, the informational region 304 may be positioned elsewhere on the in-line user interface 300 as desired, or may not be displayed.

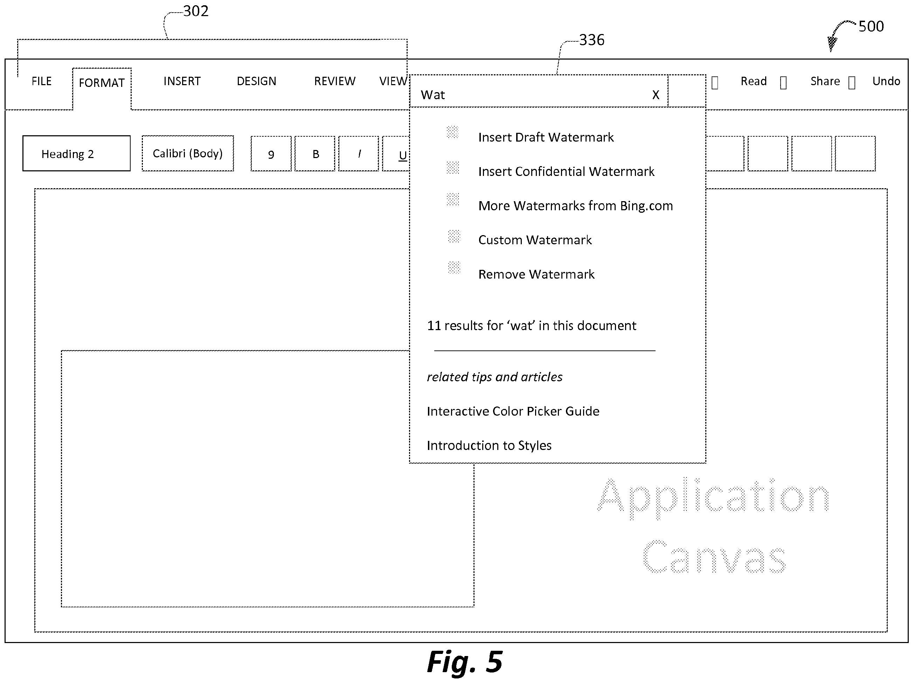

In some embodiments, a search region 306 displaying a search function entry point may be provided in-line with other displayed elements of the user interface 300. FIG. 5 illustrates a partial in-line user interface 500 including a ribbon command region and a search entry point. The search entry point may be represented by an icon (e.g., a magnifying glass icon) or glyph, text (e.g., "search"), or a combination of a text and some form of pictorial representation. Upon receiving an indication of activation of the entry point of the search function, a search box may appear 336 (e.g., as a drop-down or pop-out window) in which a user may enter a search string (e.g., shown as "wat" in FIG. 5). Display of the search region 306 may be in-line with other displayed elements of the user interface 300. In some embodiments, the search region 306 is adjacent to the ribbon command region 302. In other embodiments, the search region 306 may be positioned elsewhere on the in-line user interface 300 as desired or may not be displayed.

In some embodiments, a second informational region 308 displaying a second type of information may be provided in-line with other displayed elements of the user interface 300. As shown in FIG. 4, the second informational region 308 may display document specific information such as a document title 308. In other embodiments, the second informational region is displayed in its own row above the first informational region 304 and the ribbon command region 302. In some embodiments, the second informational region 308 may be adjacent to the search region 306. In other embodiments, the second informational region 308 may be positioned elsewhere on the in-line user interface 300 as desired or may not be displayed.

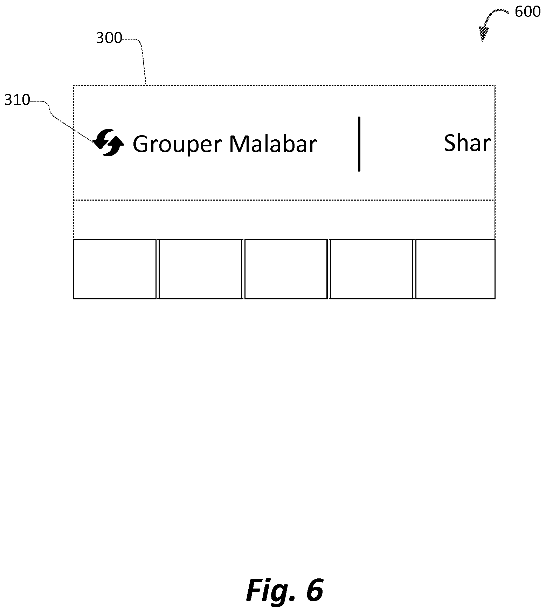

In some embodiments, a sync region 310 displaying a sync indicator may be provided in-line with other displayed elements of the user interface 300. FIG. 6 illustrates a partial in-line user interface 600 including a sync/save function. Sync function may display to a user to the status of a sync/save of a document to an external server (e.g., OneDrive). A sync indicator may be represented by an icon (e.g., as a "sync circles" icon as shown in FIG. 6) or text (e.g., "sync" or a specific location name), or as an icon or glyph in combination with text. In some embodiments, the sync region 310 may be adjacent to the second informational region 308. In other embodiments, the sync region 310 may be positioned elsewhere on the in-line user interface 300 as desired or may not be displayed.

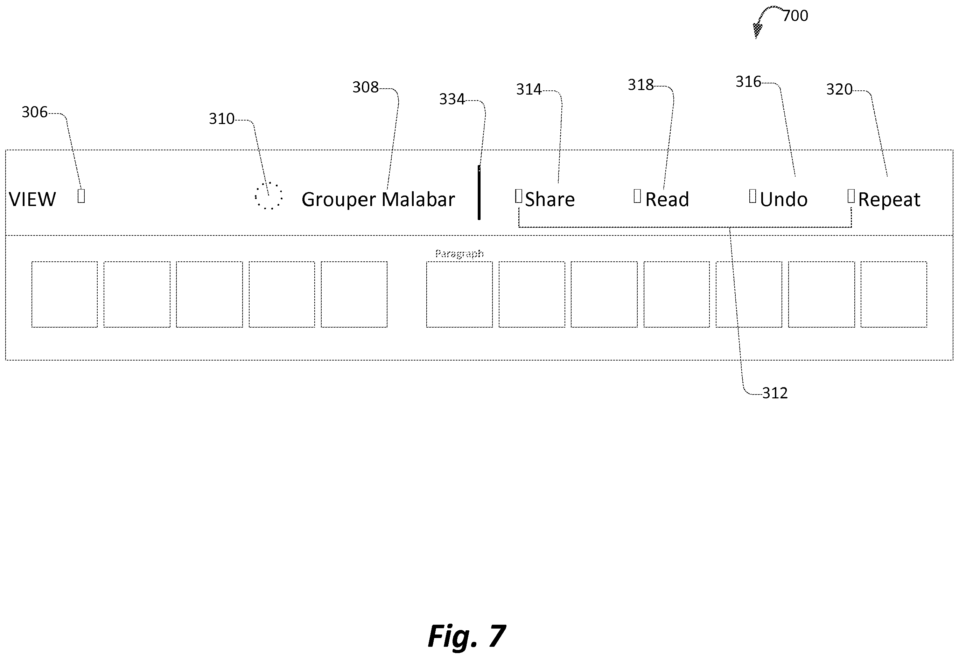

In further embodiments, a quick command region 312 displaying one or more quick commands may be provided in-line with other displayed elements of the user interface 300. FIG. 7 illustrates a partial in-line user interface 700 displaying a quick command region 312 including multiple quick commands. A quick command region 312 may display one or more quick commands (e.g., share 314, undo 316, read 318, repeat 320 of FIG. 7), thus providing global access to a small number of key commands in-line with ribbon commands and other displayed informational and/or interactive functions. Selection of a quick command may either initiate an action (e.g., undo) or may initiate the display of a window (e.g., a drop-down menu or pop-out window) where additional selections may be displayed, and further action may be taken by the user. Unlike ribbon commands, a quick command may be reliably displayed regardless of which ribbon tab is selected. Quick commands may also persist during space-constrained scenarios. In some embodiments, the quick command region 312 may be adjacent to the sync region 310 or second informational region 308. In other embodiments, the quick command region 312 may be positioned elsewhere on the in-line user interface 300 as desired or may not be displayed. One or more separators 334 may be displayed to further distinguish regions (for instance, second informational region 308 and quick command region 312) of the in-line user interface.

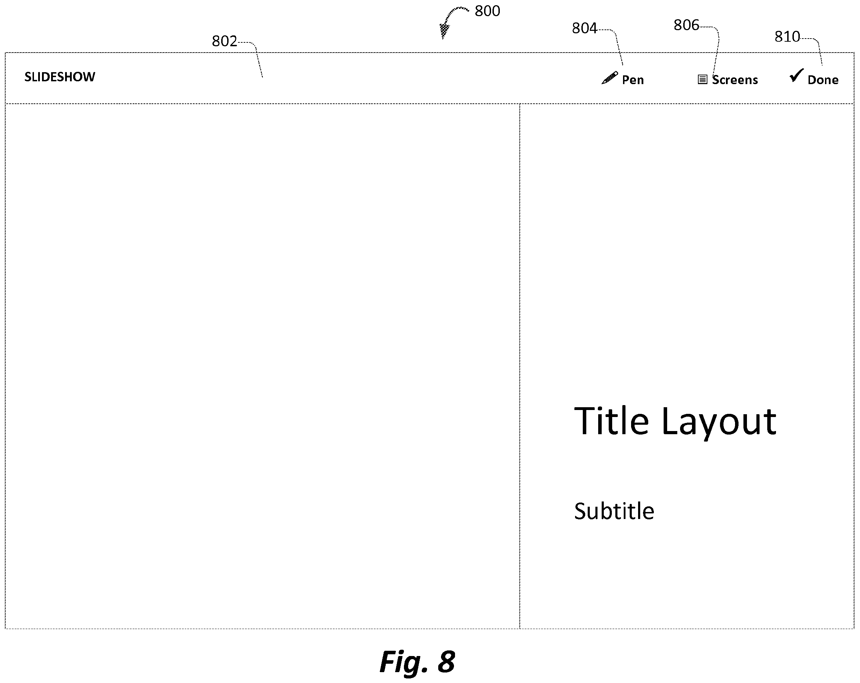

In some instances, a toolbar may be provided within the in-line user interface. FIG. 8 illustrates a partial in-line user interface 800 including toolbar 802. A toolbar 802 may include one or more commands (e.g., Pen 804, Screens 806, and Done 810) to enable quick editing of the application canvas.

In some instances, a seventh region (not shown) including a plurality of selectable controls for functionality not associated with a particular task may be provided. For instance, such generic selectable controls may be general file commands such as "open," "save" and "print." According to one embodiment, the selectable controls included in the region may be controls that are generally found and used across a number of different software applications.

Method 200 may proceed to operation 204, where an amount of available application space is identified. In order to calculate the appropriate layout for interface 300, an available application width or height may be identified or calculated. According to embodiments of the disclosure, such calculations of available space may involve ascertaining a number of available pixels in a given visual environment. In some instances, the available application width or height may correspond to an amount of window space available (e.g., within the parameters of a document open on a smartphone or other device when no other applications are open). In other instances, the available application width or height corresponds only to an amount of space available within the application upon execution (e.g., within the parameters of a document open on a tablet or other device when other applications are also open). Identifying the window size of the application may include identifying any changes in the window size of the application. A display screen may change in size due to user selection or based on a change in display screen for the computing device. In smaller computer devices (such as phones, tablets, watches, and etc.), the window size of the application may correspond to the size of the display screen. In some instances, identifying an amount of available space may include identifying a change in an amount of available space, such as, when a user rotates a device to change its orientation or manually reduces the size of an application. In some embodiments, the application is hosted within a window.

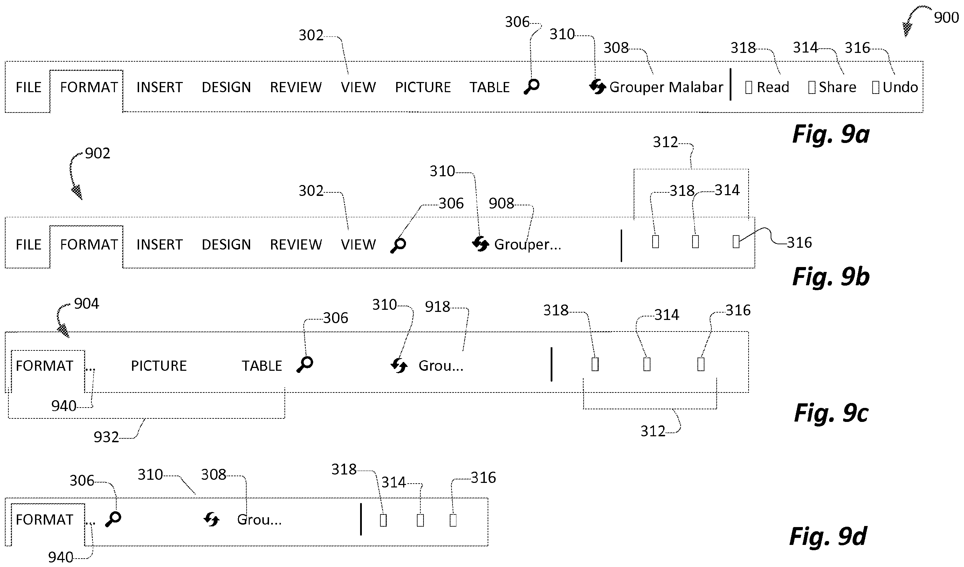

Method 200 may proceed to operation 206, where a comparison is made between the amount of space available and the amount of space needed for the multiple regions of functionalities and information. Upon identifying the available space, a component of the application executed by the computing device may calculate a layout for the in-line user interface 300. To perform such calculations, one or more application components may first calculate the size of each element (e.g., top-level functionality tabs, interactive elements, informational elements, generic commands and/or other application elements). For instance, a pixel size may be determined for each element and/or region. A total available size needed to accommodate the interface 300 may then be summed from the individual calculations. In some embodiments, the in-line user interface may be configured to display a first number of functional controls and informational elements, as shown in FIG. 9A. That is, the interface 300 may be designed to initiate the display of a full set of functional and informational regions. This may occur, for instance, when an amount of available space is calculated and/or determined by one or more application components based on a screen width of 1024 pixels or greater. A first number of top-level ribbon commands (e.g., in the form of tabs) may be displayed in the ribbon command region 302, along with a first number of independent quick commands in the quick command region 312, document information in the document information region 308, a first number of generic commands, application information, etc. However, depending upon the amount of space available to the application (e.g., due to screen size constraints, application window size adjustments, device type, etc.), each region may be constrained in terms of how many, if any, of each functional control and how much information, if any, may be displayed. Accordingly, to adjust the available space within a screen, the interface may first determine, for example, how many pixels each region encompasses, and may then sum the pixel amounts to identify a total pixel size. A comparison may then be made between the total size needed and the amount of space available. As will be described below, if there is not enough space available to accommodate an interface 300 of a first size, one or more regions (e.g. ribbon command region, first informational region, second informational region, and/or etc.) or elements (e.g., top-level functionality tabs, interactive elements, informational elements, generic commands and/or other application elements) of one or more regions may be reduced until the total size is equivalent to the available size.

Upon identifying an amount of available space, method 200 may proceed to operation 208, where the visual display of at least one of the multiple regions of application functionalities and information may be adjusted. Accordingly, when insufficient space is available in the interface 300 for displaying regions, a determination may be made at application run time as to any regions that may be truncated or eliminated. For instance, an amount of available space may be calculated based on screen width of 768 pixels, or a change in width or height from one pixel amount to 768 pixels, 500 pixels, or any other reduction/enlargement in pixel size may be detected. For instance, if the user manually reduces the size of the interface 300, or rotates the device, a similar determination may be made as to the available space for displaying the regions. As should be appreciated, a determination may be made as to the order of truncating functional or informational regions, as well as for determining which selectable functionality control sections are displayed and which sections are collapsed, and in what order, as the available space in the user interface is decreased.

In some embodiments, the visual display of the interface 300 may be adjusted according to one or more predetermined scaling priorities to accommodate the identified application width. As mentioned above, the in-line user interface 300 may adjust to accommodate available application space. Such an adjustment may occur prior to displaying the interface 300. As should be appreciated, depending upon the amount of space available for displaying the in-line user interface 300 or depending upon the display settings utilized by a given user of the interface 300, varying amounts of space will be available for each of the above described regions and elements.

To adjust the interface in response to available application space identification, a priority list or hierarchy of truncation may be implemented. In some embodiments, the priority list identifies whether a region should change in size, display both a graphical representation and a textual representation, or only display one of a graphical representation and a textual representation. In such embodiments, the specific layout of the interface 300 may be calculated by identifying a width of one or more regions for display, identifying an available application width based on the available application space, and injecting regions that fit within the available width into the display. In embodiments where the interface 300 is displayed vertically, an available application height may be calculated, and corresponding steps for identifying a number and sizes of regions to display may be performed.

Priority rules corresponding to the reduction/truncation hierarchy may be used to determine which aspects of the landscape are reduced. Such rules may be stored on the application. One or more priority rules may be utilized to identify which elements may first be truncated. In some embodiments, each element and/or region may be allocated an amount of space, which may be a percentage of the available space within the application. In other embodiments, some regions or elements of regions may be completely truncated. In some instances where an amount of the interface 300 is to be reduced, a first region may be selected for reduction. A first scaling may involve truncating a document information region and/or a quick command region. For instance, a first step may be to reduce/truncate the document information region 308 (e.g., a document name) to first minimum threshold (e.g., a first number of characters). A truncated document title may be displayed as a shortened version of the original title. A non-functional ellipsis or other like element may be displayed to provide a visual indication that the document information has been truncated.

As illustrated in FIG. 9B, a second display 902 of interface 300 may include a non-truncated ribbon command region 302, a search region 306, a truncated document title 908 and a truncated quick command region 312. A truncated quick command region 312 may display quick commands represented as icons or glyphs, rather than displaying an icon or glyph along-side a textual description, or may display an icon or glyph with a truncated command name. A non-functional ellipsis or other like element may also be displayed to provide a visual indication that the quick command name has been truncated. In addition, as seen in FIG. 9D, the Picture and Table commands may also be truncated.

If a determination is made that reduction of the first region is not sufficient, a second region may be reduced or truncated. For instance, a second step may be to further reduce/truncate the document information region 918 to a second minimum threshold. If a determination is made that reduction of the second region is not sufficient, a third region may be reduced or truncated. For instance, a third step may be to truncate one or more quick commands such that only an icon or glyph of the quick command displays (e.g., glyphs 314, 316 and 318 of FIGS. 9B, 9C and 9D). If a determination is made that reduction of the third region is not sufficient, a fourth region may be reduced or truncated or a previously truncated region may be further truncated. For instance, a fourth step may be to further reduce/truncate the document information region 308 to a third minimum threshold.

If a determination is made that reduction of the fourth region is not sufficient, a fifth region may be reduced or truncated. As illustrated in FIG. 9C, a third display 904 of interface 300 may include a truncated ribbon command region 932 that includes a switcher that can be activated by selecting a button in the form of an ellipsis 340, a search region 306, a non-truncated document title 308 a sync region 310, and a truncated quick command region 312. The button for the selecting the switcher may take any suitable form as known by a person of skill in the art. In some embodiments, the button for the switcher is in the form a chevron, an asterisk, or a downward facing chevron. This list is exemplary only and is not mean to be limiting. Thus, a fifth step may be to truncate one or more labels of one or more ribbon commands within ribbon command region 302. Truncated ribbon command region 932 may display fewer top-level ribbon commands (e.g., tabs) or employ a switcher 940 (e.g., in the form of an ellipsis) in place of one or more ribbon command tabs. Selection of the switcher 940 may cause the display of a window (e.g., drop-down menu or pop-out box) for selecting additional (hidden) commands. In some instances, the sixth step involves altering the ribbon command region 302 to only display a switcher within a single (e.g., selected) ribbon command. In other embodiments, a gradual reduction in a number of displayed ribbon commands may be accomplished by replacing truncated commands with the switcher 940.

If a determination is made that reduction of the fifth region is not sufficient, a sixth region may be reduced or truncated. For instance, as illustrated in FIG. 9D, the region including the "Picture and Table" commands may also be truncated. Accordingly, FIG. 9D illustrates an example of a minimum size that takes advantage of all of the previously described truncations and space reductions.

In further embodiments, when a change in available width is identified, the functional landscape may adaptively react to a new available amount of space relative to a previously available amount of space. For instance, the functional landscape may scale up or down. For instance, scaling logic may adapt the relative sizing/representation of an element of the in-line user interface 300 to provide appropriate scaling across a variety of device sizes and/or window/screen sizes. For example, where a window and/or screen size for an application might have been half the width of the screen, when maximized the same logic for scaling down as described above can be used to take advantage of the newly available pixels to scale the user interface 300 up to the larger pixel. In some embodiments, the scaling up of the window/screen size is not merely the reverse application of the scaling down logic. In these embodiments, the landscape of the graphical user interface 300 is recalculated each time a pixel size increases utilizing priority rules corresponding to the increase/truncation hierarchy to determine which aspects of the landscape to increase in size.

In alternate embodiments, a frequency of use determination may be made prior to truncating or increasing one or more functional and/or informational regions. For instance, a "most used" or "most recently used" determination may be made. In other embodiments, a non-functional or informational element (e.g., separator 334) may be removed prior to or along with other truncation operations.

According to an alternate embodiment, if the interface 300 lacks sufficient space to display all regions of functional controls and information, the size of the display of individual elements may be reduced to allow space for the display of all regions. According to one aspect of this embodiment, different sizes of elements, for example small, medium and large, may be defined. In such embodiments, at display time, a determination may be made as to the available space. At a starting point, the largest size for each element may be presented. As required, the display size may be reduced (i.e., large to medium to small) for one or more elements of a region until each region fits in the available space. In addition, for smaller layouts, the layout of regions or individual elements contained in given regions may be rearranged to allow for more efficient use of space.

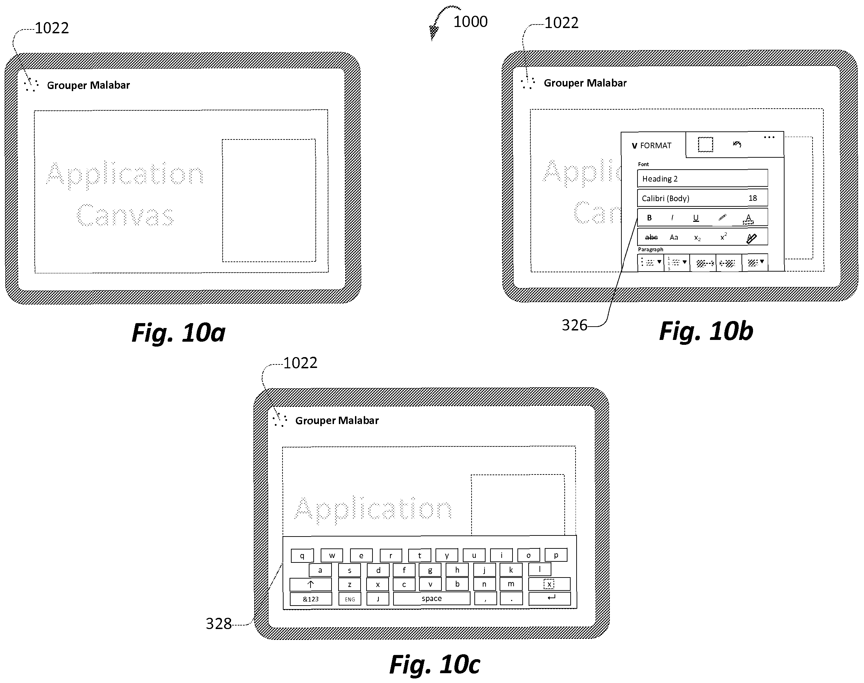

FIGS. 10A-10C illustrate computer screens 1000 showing embodiments of an in-line user interface including one or more expanded or minimized elements. In some embodiments, such as is shown in FIG. 10A, particularly in situations where it is desirable to minimize application canvas clutter or distractions, the in-line user interface 300 may display in "hint" mode, where only one or a few elements are displayed while the document is displayed. Hint mode may display a switcher element 1022, which may serve as an entry point to additional functionality and/or information. In some embodiments, hint mode may also display, for instance, the document title or document number, or a truncated version of either of those. Displaying such a hint provides a visual reminder to a user that the in-line user interface is hidden, while surfacing one or a few aspects of the document or application that might be considered helpful when working with the document. In hint mode, the user may toggle the state of the interface 300 from a default expanded state to a minimal "hint" state, and back. A hint mode setting may be activated by a user or may display by default depending on device or screen size.

In some embodiments, the in-line user interface 300 may appear as a pop-over, covering a portion of the application canvas without the application canvas resizing. For instance, as illustrated in FIGS. 10B and 10C, in certain modes (e.g., "read" mode), where a less invasive user interface maybe desired, one or more pop-overs 326, 328 may appear briefly (for instance, upon activation of switcher 1022) and may then be dismissed manually by a user or automatically hide after a set time interval. In such an embodiment, the application canvas may not resize when the header opens. In this state, the interface 300 may be initiate and display just the "Hint" (described above), but then expands to the full version (e.g., with one or more functional or informational regions such as the ribbon command region or toolbar region when a user imitates display of additional regions (e.g., swipes from the top or other such initiation action). For pop-over mode this expanded state may be temporary, and the interface 300 may automatically return to the hint when another region of the canvas is activated (e.g., touched, mouse-clicked, etc.). Alternatively, in some embodiments, the in-line user interface 300 may appear as a sticky (i.e., the interface maintains a current open/closed state until the user modifies the interface 300) that also covers a portion of the application canvas.

In other embodiments, the interface 300 may be locked. That is, the interface 300 may persist and a function that may be utilized to dismiss the interface 300 may be disabled.

In additional embodiments, an application may be fully immersive, where none of the in-line user interface 300 is displayed as a document is viewed or processed. In such instances, a movement such as a swipe or a touch may activate the interface 300, which may then display one or more of the above described elements, depending, for instance, on device type or screen availability. An immersive mode setting may be activated by a user or may display by default depending on device or screen size. In some embodiments, the in-line user interface 300 may be sticky (i.e., the interface maintains a current open/closed state until the user modifies the interface 300). In some instances, a user may modify the interface state by swiping in from an edge, or via a mouse or keyboard equivalent.

Techniques for providing a scalable user interface are described. Although embodiments are described in language specific to structural features and/or methodological acts, it is to be understood that the embodiments defined in the appended claims are not necessarily limited to the specific features or acts described above. Rather, the specific features and acts are disclosed as example forms of implementing the claimed embodiments.

A number of methods may be implemented to perform the techniques discussed herein. Aspects of the methods may be implemented in hardware, firmware, or software, or a combination thereof. The methods are shown as a set of blocks that specify operations performed by one or more devices and are not necessarily limited to the orders shown for performing the operations by the respective blocks. Furthermore, an operation shown with respect to a particular method may be combined and/or interchanged with an operation of a different method in accordance with one or more implementations. Aspects of the methods may be implemented via interaction between various entities discussed above with reference to the user interface 300.

The embodiments and functionalities described herein may operate via a multitude of computing systems including, without limitation, desktop computer systems, wired and wireless computing systems, mobile computing systems (e.g., mobile telephones, netbooks, tablet or slate type computers, notebook computers, and laptop computers), hand-held devices, multiprocessor systems, microprocessor-based or programmable consumer electronics, minicomputers, and mainframe computers.

In addition, the embodiments and functionalities described herein may operate over distributed systems (e.g., cloud-based computing systems), where application functionality, memory, data storage and retrieval and various processing functions may be operated remotely from each other over a distributed computing network, such as the Internet or an intranet. User interfaces and information of various types may be displayed via on-board computing device displays or via remote display units associated with one or more computing devices. For example, user interfaces and information of various types may be displayed and interacted with on a wall surface onto which user interfaces and information of various types are projected. Interaction with the multitude of computing systems with which embodiments of the invention may be practiced include, keystroke entry, touch screen entry, voice or other audio entry, gesture entry where an associated computing device is equipped with detection (e.g., camera) functionality for capturing and interpreting user gestures for controlling the functionality of the computing device, and the like.

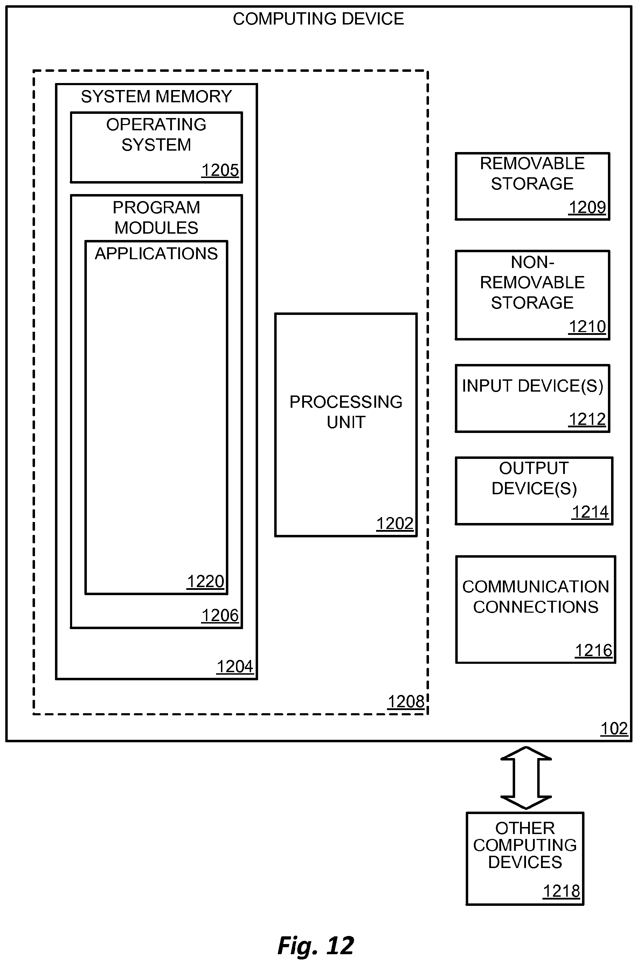

FIGS. 12-14 and the associated descriptions provide a discussion of a variety of operating environments in which embodiments of the invention may be practiced. However, the devices and systems illustrated and discussed with respect to FIGS. 12-14 are for purposes of example and illustration and are not limiting of a vast number of computing device configurations that may be utilized for practicing embodiments of the invention, described herein.

FIG. 12 is a block diagram illustrating physical components (i.e., hardware) of a computing device 102 with which embodiments of the invention may be practiced. The computing device components described below may be suitable for the computing devices described above. In a basic configuration, the computing device 102 may include at least one processing unit 1202 and a system memory 1204. Depending on the configuration and type of computing device, the system memory 1204 may comprise, but is not limited to, volatile storage (e.g., random access memory), non-volatile storage (e.g., read-only memory), flash memory, or any combination of such memories. The system memory 1204 may include an operating system 1205 and one or more program modules 1206 suitable for running software applications 1220 such as the device module 106. The operating system 1205, for example, may be suitable for controlling the operation of the computing device 102. Furthermore, embodiments of the invention may be practiced in conjunction with a graphics library, other operating systems, or any other application program and is not limited to any particular application or system. This basic configuration is illustrated in FIG. 12 by those components within a dashed line 1208. The computing device 102 may have additional features or functionality. For example, the computing device 102 may also include additional data storage devices (removable and/or non-removable) such as, for example, magnetic disks, optical disks, or tape. Such additional storage is illustrated in FIG. 12 by a removable storage device 1209 and a non-removable storage device 1210.

As stated above, a number of program modules and data files may be stored in the system memory 1204. While executing on the processing unit 1202, the program modules 1206 (e.g., the device module 106) may perform processes including, but not limited to, one or more of the stages of the method 200 illustrated in FIG. 2. Other program modules that may be used in accordance with embodiments of the present invention may include electronic mail and contacts applications, word processing applications, spreadsheet applications, database applications, slide presentation applications, drawing or computer-aided application programs, etc.

Furthermore, embodiments of the invention may be practiced in an electrical circuit comprising discrete electronic elements, packaged or integrated electronic chips containing logic gates, a circuit utilizing a microprocessor, or on a single chip containing electronic elements or microprocessors. For example, embodiments of the invention may be practiced via a system-on-a-chip (SOC) where each or many of the components illustrated in FIG. 12 may be integrated onto a single integrated circuit. Such an SOC device may include one or more processing units, graphics units, communications units, system virtualization units and various application functionality all of which are integrated (or "burned") onto the chip substrate as a single integrated circuit. When operating via an SOC, the functionality, described herein, with respect to the device module 106 may be operated via application-specific logic integrated with other components of the computing device 102 on the single integrated circuit (chip). Embodiments of the invention may also be practiced using other technologies capable of performing logical operations such as, for example, AND, OR, and NOT, including but not limited to mechanical, optical, fluidic, and quantum technologies. In addition, embodiments of the invention may be practiced within a general purpose computer or in any other circuits or systems.

The computing device 102 may also have one or more input device(s) 1212 such as a keyboard, a mouse, a pen, a sound input device, a touch input device, etc. The output device(s) 1214 such as a display, speakers, a printer, etc. may also be included. The aforementioned devices are examples and others may be used. The computing device 102 may include one or more communication connections 1216 allowing communications with other computing devices 1218. Examples of suitable communication connections 1216 include, but are not limited to, RF transmitter, receiver, and/or transceiver circuitry; universal serial bus (USB), parallel, and/or serial ports.

The term computer readable media as used herein may include computer storage media. Computer storage media may include volatile and nonvolatile, removable and non-removable media implemented in any method or technology for storage of information, such as computer readable instructions, data structures, or program modules. The system memory 1204, the removable storage device 1209, and the non-removable storage device 1210 are all computer storage media examples (i.e., memory storage.) Computer storage media may include RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device 102. Any such computer storage media may be part of the computing device 102. Computer storage media does not include a carrier wave or other propagated or modulated data signal.

Communication media may be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media.

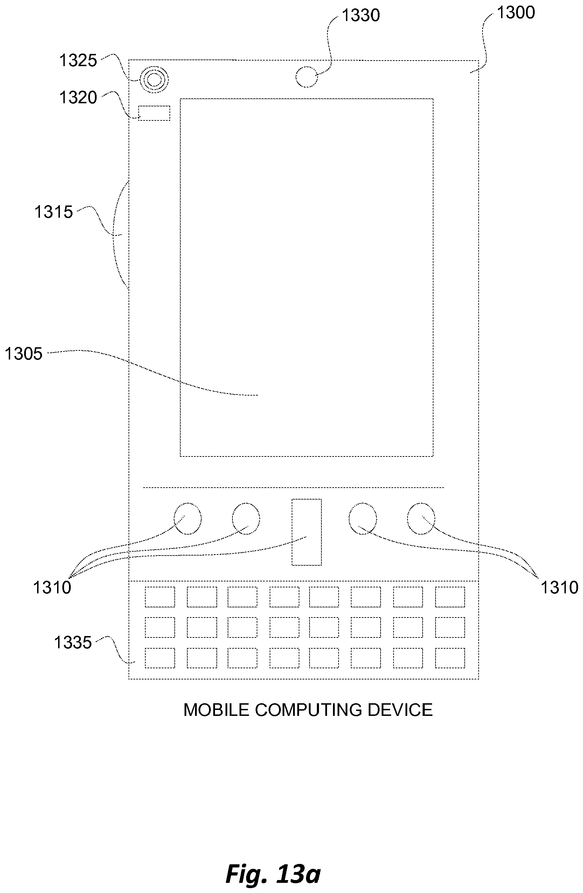

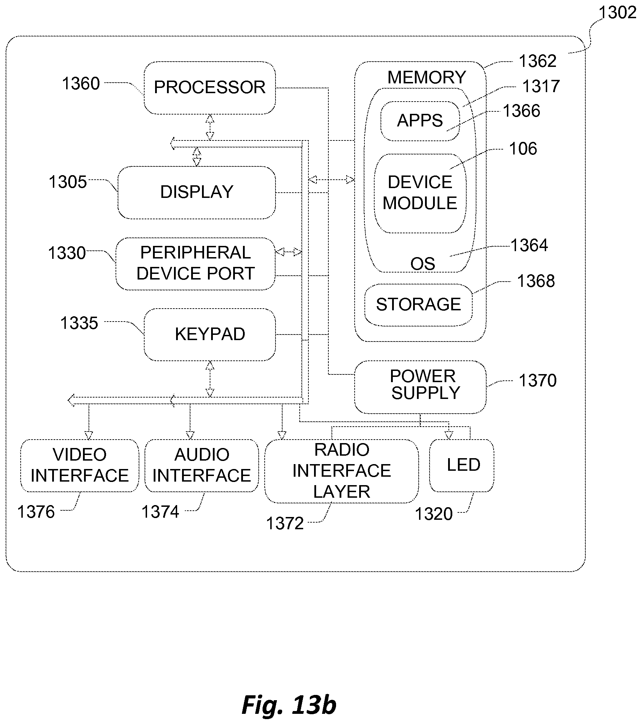

FIG. 13A and 13B illustrate a mobile computing device 1300, for example, a mobile telephone, a smart phone, a tablet personal computer, a laptop computer, and the like, with which embodiments of the invention may be practiced. With reference to FIG. 13A, one embodiment of a mobile computing device 1300 for implementing the embodiments is illustrated. In a basic configuration, the mobile computing device 1300 is a handheld computer having both input elements and output elements. The mobile computing device 1300 typically includes a display 1305 and one or more input buttons 1310 that allow the user to enter information into the mobile computing device 1300. The display 1305 of the mobile computing device 1300 may also function as an input device (e.g., a touch screen display). If included, an optional side input element 1315 allows further user input. The side input element 1315 may be a rotary switch, a button, or any other type of manual input element. In alternative embodiments, mobile computing device 1300 may incorporate more or less input elements. For example, the display 1305 may not be a touch screen in some embodiments. In yet another alternative embodiment, the mobile computing device 1300 is a portable phone system, such as a cellular phone. The mobile computing device 1300 may also include an optional keypad 1335. Optional keypad 1335 may be a physical keypad or a "soft" keypad generated on the touch screen display. In various embodiments, the output elements include the display 1305 for showing a graphical user interface (GUI), a visual indicator 1320 (e.g., a light emitting diode), and/or an audio transducer 1325 (e.g., a speaker). In some embodiments, the mobile computing device 1300 incorporates a vibration transducer for providing the user with tactile feedback. In yet another embodiment, the mobile computing device 1300 incorporates input and/or output ports, such as an audio input (e.g., a microphone jack), an audio output (e.g., a headphone jack), and a video output (e.g., a HDMI port) for sending signals to or receiving signals from an external device.

FIG. 13B is a block diagram illustrating the architecture of one embodiment of a mobile computing device. That is, the mobile computing device 1300 can incorporate a system (i.e., an architecture) 1302 to implement some embodiments. In one embodiment, the system 1302 is implemented as a "smart phone" capable of running one or more applications (e.g., browser, e-mail, calendaring, contact managers, messaging clients, games, and media clients/players). In some embodiments, the system 1302 is integrated as a computing device, such as an integrated personal digital assistant (PDA) and wireless phone.

One or more application programs 1366 may be loaded into the memory 1362 and run on or in association with the operating system 1364. Examples of the application programs include phone dialer programs, e-mail programs, personal information management (PIM) programs, word processing programs, spreadsheet programs, Internet browser programs, messaging programs, collaborative programs, note-taking programs, and so forth. The system 1302 also includes a non-volatile storage area 1368 within the memory 1362. The non-volatile storage area 1368 may be used to store persistent information that should not be lost if the system 1302 is powered down. The application programs 1366 may use and store information in the non-volatile storage area 1368, such as e-mail or other messages used by an e-mail application, and the like. A synchronization application (not shown) also resides on the system 1302 and is programmed to interact with a corresponding synchronization application resident on a host computer to keep the information stored in the non-volatile storage area 1368 synchronized with corresponding information stored at the host computer. As should be appreciated, other applications may be loaded into the memory 1362 and run on the mobile computing device 1300, including the device module 106 described herein.

The system 1302 has a power supply 1370, which may be implemented as one or more batteries. The power supply 1370 might further include an external power source, such as an AC adapter or a powered docking cradle that supplements or recharges the batteries

The system 1302 may also include a radio 1372 that performs the function of transmitting and receiving radio frequency communications. The radio 1372 facilitates wireless connectivity between the system 1302 and the "outside world," via a communications carrier or service provider. Transmissions to and from the radio 1372 are conducted under control of the operating system 1364. In other words, communications received by the radio 1372 may be disseminated to the application programs 1366 via the operating system 1364, and vice versa.

The visual indicator 1320 may be used to provide visual notifications, and/or an audio interface 1374 may be used for producing audible notifications via the audio transducer 1325. In the illustrated embodiment, the visual indicator 1320 is a light emitting diode (LED) and the audio transducer 1325 is a speaker. These devices may be directly coupled to the power supply 1370 so that when activated, they remain on for a duration dictated by the notification mechanism even though the processor 1360 and other components might shut down for conserving battery power. The LED may be programmed to remain on indefinitely until the user takes action to indicate the powered-on status of the device. The audio interface 1374 is used to provide audible signals to and receive audible signals from the user. For example, in addition to being coupled to the audio transducer 1325, the audio interface 1374 may also be coupled to a microphone to receive audible input, such as to facilitate a telephone conversation. In accordance with embodiments of the present invention, the microphone may also serve as an audio sensor to facilitate control of notifications, as will be described below. The system 1302 may further include a video interface 1376 that enables an operation of an on-board camera 1330 to record still images, video stream, and the like.

A mobile computing device 1300 implementing the system 1302 may have additional features or functionality. For example, the mobile computing device 1300 may also include additional data storage devices (removable and/or non-removable) such as, magnetic disks, optical disks, or tape. Such additional storage is illustrated in FIG. 13B by the non-volatile storage area 1368.

Data/information generated or captured by the mobile computing device 1300 and stored via the system 1302 may be stored locally on the mobile computing device 1300, as described above, or the data may be stored on any number of storage media that may be accessed by the device via the radio 1372 or via a wired connection between the mobile computing device 1300 and a separate computing device associated with the mobile computing device 1300, for example, a server computer in a distributed computing network, such as the Internet. As should be appreciated such data/information may be accessed via the mobile computing device 1300 via the radio 1372 or via a distributed computing network. Similarly, such data/information may be readily transferred between computing devices for storage and use according to well-known data/information transfer and storage means, including electronic mail and collaborative data/information sharing systems.

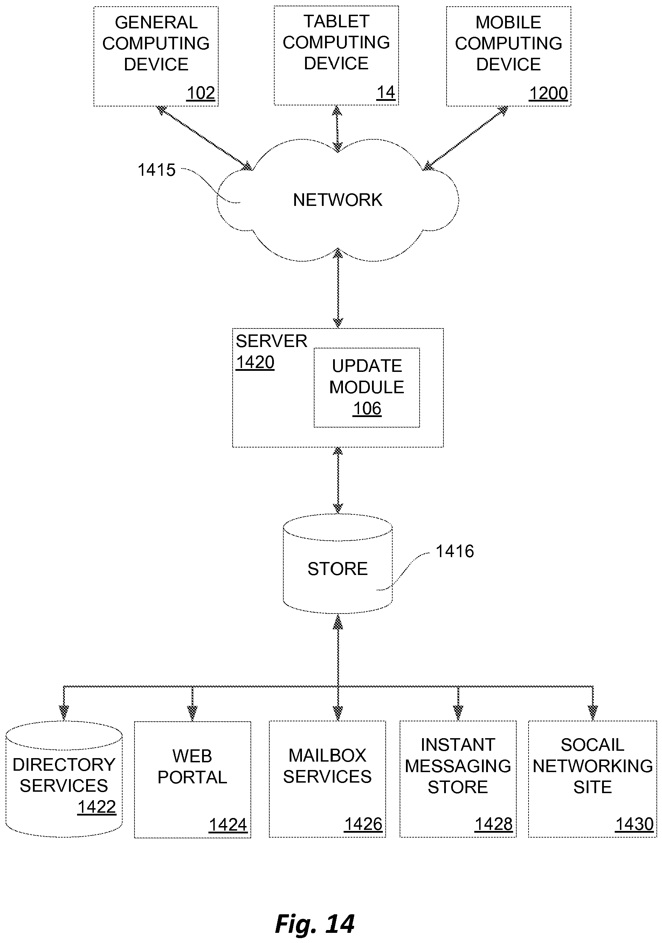

FIG. 14 illustrates one embodiment of the architecture of a system for managing device driver updates, as described above. Drivers managed with the device module 106 may be stored in different communication channels or other storage types. For example, various documents may be stored using a directory service 1422, a web portal 1424, a mailbox service 1426, an instant messaging store 1428, or a social networking site 1430. The device module 106 may use any of these types of systems or the like for enabling data utilization, as described herein. A server 1420 may provide the device module 106 to clients. As one example, the server 1420 may be a web server providing the device module 106 over the web. The server 1420 may provide the device module 106 over the web to clients through a network 1415. By way of example, the client computing device may be implemented as the computing device 102 and embodied in a personal computer, a tablet computing device 1410 and/or a mobile computing device 1400 (e.g., a smart phone). Any of these embodiments of the client computing device 102, 14, and 1200 may obtain content from the store 1416.

Embodiments of the present invention, for example, are described above with reference to block diagrams and/or operational illustrations of methods, systems, and computer program products according to embodiments of the invention. The functions/acts noted in the blocks may occur out of the order shown in any flowchart. For example, two blocks shown in succession may in fact be executed substantially concurrently or the blocks may sometimes be executed in the reverse order, depending upon the functionality/acts involved.

The description and illustration of one or more embodiments provided in this application are not intended to limit or restrict the scope of the invention as claimed in any way. The embodiments, examples, and details provided in this application are considered sufficient to convey possession and enable others to make and use the best mode of claimed invention. The claimed invention should not be construed as being limited to any embodiment, example, or detail provided in this application. Regardless of whether shown and described in combination or separately, the various features (both structural and methodological) are intended to be selectively included or omitted to produce an embodiment with a particular set of features. Having been provided with the description and illustration of the present application, one skilled in the art may envision variations, modifications, and alternate embodiments falling within the broader aspects of the general inventive concept embodied in this application that do not depart from the broader scope of the claimed invention.

## Claims

1. A method comprising:
arranging (202) multiple regions of application functionalities and information for display substantially in-line within a designated area of a user interface;
calculating a pixel size for each region of the multiple regions of application functionalities and information for display;
summing, from the calculation of the pixel size for each region, pixel amounts to identify a total pixel size;
identifying (204) an amount of an available space to the user interface within the designated area of the user interface;
comparing (206) the total pixel size to the amount of the available space; and
adjusting (208) a visual display of at least one of the multiple regions of application functionalities and information according to one or more predetermined scaling priorities based on the comparing to accommodate the available space within the designated area of the user interface, wherein the scaling priorities instruct the application to perform a series of truncation operations on a first region of the multiple regions of application functionalities and information to a first minimum threshold prior to performing a truncation operation on a second region of the multiple regions of application functionalities and information.

2. The method of claim 1, wherein the arranging comprises:
arranging an in-line display of at least two of an informational region, a ribbon command region, a document information region, a search region, a sync region and a quick command region.

3. The method of claim 1, wherein the identifying comprises:
calculating an available user interface width or height by determining a number of pixels available in one or more of the width or height of the available space.

4. The method of claim 1, wherein the adjusting comprises:
applying a truncation hierarchy to one or more of the multiple regions of application functionalities and information, wherein the truncation hierarchy identifies whether a region should change in size, display both a graphical representation and a textual representation, or only display one of a graphical representation and a textual representation;
performing at least one truncation operation on at least one of the document information region and a functional region until the at least one truncation operation is sufficient to fit the user interface within the available space,
wherein performing the at least one truncation operation on at least one of the functional region and the information region of the user interface comprises:
eliminating text associated with and displayed adjacent to one or more functional icons.

5. The method of claim 1, wherein the adjusting comprises:
applying a truncation hierarchy to one or more of the multiple regions of application functionalities and information, wherein the truncation hierarchy identifies whether a region should change in size, display both a graphical representation and a textual representation, or only display one of a graphical representation and a textual representation; and
truncating the ribbon command region to a switcher element serving as an entry point to ribbon command functionality.

6. The method of claim 1, wherein the display device comprises at least one of:
a mobile device;
a smart device;
a tablet;
a smart watch;
a wearable computer;
a personal computer;
a desktop computer; and
a laptop computer.

7. The method of claim 1, wherein the application is at least one of:
an email application;
a social networking application;
a collaboration application;
a note-taking application;
an enterprise management application;
a messaging application;
a word processing application;
a spreadsheet application;
a database application;
a presentation application;
a contacts application; and
a calendaring application.

8. A system comprising:
an application (1220) executed at least in part by a computing device (102), the computing device comprising:
at least one processor (1202);
a memory (1210) for containing computer-executable instructions, which when executed by the at least one processor, cause the computing device to perform a method comprising:
arranging multiple regions of application functionalities and information for display substantially in-line within a designated area of the application;
calculating a pixel size for each region of the multiple regions of application functionalities and information for display;
summing, from the calculation of the pixel size for each region, pixel amounts to identify a total pixel size;
identifying an amount of an available space for a user interface within the designated area of the application;
comparing the total pixel size to the amount of the available space; and
adjusting a visual display of at least one of the multiple regions of application functionalities and information according to one or more predetermined scaling priorities based on the comparing to accommodate the available space within the designated area of the application, wherein the scaling priorities instruct the application to perform a series of truncation operations on a first region of the multiple regions of application functionalities and information to a first minimum threshold prior to performing a truncation operation on a second region of the multiple regions of application functionalities and information.

9. The system of claim 8, wherein the identifying comprises:
calculating an available user interface width or height by determining a number of pixels available in one or more of the width or height of the available space

10. A computer-readable storage medium comprising computer-executable instructions stored thereon which, when executed by a computing system for an application, cause the computing system to perform a method for displaying a user interface comprising:
arranging (202) multiple regions of application functionalities and information for display substantially in-line within a designated area of the application, wherein the arranging includes displaying at least two of an informational region, a ribbon command region, a document information region, a search region, a sync region and a quick command region in a row within an area designated for the user interface;
calculating a pixel size for each region of the multiple regions of application functionalities and information for display;
summing, from the calculation of the pixel size for each region, pixel amounts to identify a total pixel size;
identifying (204) an amount of an available space to the user interface within the designated area of the application;
comparing (206) the total pixel size of the multiple regions to the amount of the available space; and
adjusting (208) a visual display of at least one of the multiple regions of application functionalities and information according to one or more predetermined scaling priorities based on the comparing to accommodate the available space within the designated area of the application, wherein the scaling priorities instruct the application to perform a series of truncation operations on a first region of the multiple regions of application functionalities and information to a first minimum threshold prior to performing a truncation operation on a second region of the multiple regions of application functionalities and information.

## Patentansprüche

1. Verfahren, mit:
Anordnen (202), im Wesentlichen nebeneinander, von mehreren Gebieten aus Anwendungsfunktionen und Informationen zur Anzeige innerhalb eines zugewiesenen Bereichs einer Benutzerschnittstelle;
Berechnen einer Pixelgröße für jedes Gebiet der mehreren Gebiete aus Anwendungsfunktionen und Informationen für die Anzeige;
Aufsummieren, aus der Berechnung der Pixelgröße für jedes Gebiet, von Pixelbeträgen, um eine Gesamtpixelgröße zu ermitteln;
Ermitteln (204) eines Betrages an verfügbarem Platz in der Benutzerschnittstelle innerhalb des zugewiesenen Bereichs der Benutzerschnittstelle;
Vergleichen (206) der Gesamtpixelgröße mit der Größe des verfügbaren Platzes; und
Einstellen (208) einer visuellen Anzeige mindestens eines der mehreren Gebiete aus Anwendungsfunktionen und Informationen gemäß einer oder mehrerer vorbestimmter Skalierungsprioritäten auf der Grundlage des Vergleichs, um den verfügbaren Platz in dem zugewiesenen Bereich der Benutzerschnittstelle aufzunehmen, wobei die Skalierungsprioritäten die Anwendung anweisen, eine Reihe von Abschneideoperationen an einem ersten Gebiet der mehreren Gebiete aus Anwendungsfunktionen und Informationen bis zu einem ersten minimalen Schwellwert auszuführen, bevor eine Abschneideoperation an einem zweiten Gebiet der mehreren Gebiete aus Anwendungsfunktionen und Informationen ausgeführt wird.

2. Verfahren nach Anspruch 1, wobei das Anordnen umfasst:
Anordnen einer Anzeige in Form einer Reihe von mindestens zwei der folgenden Gebiete: ein Informationsgebiet, ein Bandbefehlsgebiet, ein Dokumenteninformationsgebiet, ein Suchgebiet, ein Synchronisierungsgebiet und ein Schnellbefehlsgebiet.

3. Verfahren nach Anspruch 1, wobei das Ermitteln umfasst:
Berechnen einer verfügbaren Benutzerschnittstellenbreite oder -höhe durch Ermitteln einer Anzahl an Pixel, die in der Breite und/oder Höhe des verfügbaren Platzes verfügbar sind.

4. Verfahren nach Anspruch 1, wobei das Einstellen umfasst:
Anwenden einer Abschneidehierarchie auf eines oder mehrere der mehreren Gebiete aus Anwendungsfunktionen und Informationen, wobei die Abschneidehierarchie angibt, ob ein Gebiet: seine Größe ändern sollte, sowohl eine grafische Darstellung, als auch eine Textdarstellung anzeigen sollte, oder entweder eine grafische Darstellung oder eine Textdarstellung anzeigen sollte;
Ausführen mindestens einer Abschneideoperation an dem Dokumenteninformationsgebiet und/oder einem Funktionsgebiet, bis die mindestens eine Abschneideoperation ausreichend ist, um die Benutzerschnittstelle in dem verfügbaren Platz einzupassen,
wobei Ausführen der mindestens einen Abschneidoperation an dem Funktionsgebiet und/oder dem Informationsgebiet der Benutzerschnittstelle umfasst:
Eliminieren von Text, der zu einem oder mehreren Funktionssymbolen gehört und benachbart dazu angezeigt wird.

5. Verfahren nach Anspruch 1, wobei das Einstellen umfasst:
Anwenden einer Abschneidehierarchie auf eines oder mehrere der mehreren Gebiete aus Anwendungsfunktionen und Informationen, wobei die Abschneidehierarchie angibt, ob ein Gebiet: sich in der Größe ändern sollte, sowohl eine grafische Darstellung als eine textliche Darstellung anzeigen sollte oder entweder eine grafische Darstellung oder eine textliche Darstellung anzeigen sollte; und
Abschneiden des Bandbefehlsgebiets auf ein Schaltelement, das als Eintrittspunkt zur Bandbefehlsfunktion dient.

6. Verfahren nach Anspruch 1, wobei die Anzeigeeinrichtung umfasst:
ein Mobilgerät; und/oder
ein intelligentes Gerät; und/oder
einen Tablet-Rechner; und/oder
eine intelligente Armbanduhr; und/oder
einen am Körper tragbaren Computer; und/oder
einen Personalcomputer; und/oder
einen Tischrechner; und/oder
einen Laptop-Computer.

7. Verfahren nach Anspruch 1, wobei die Anwendung ist:
eine E-Mail-Anwendung; und/oder
eine Anwendung für soziale Netzwerke; und/oder
eine Kollaborationsanwendung; und/oder
eine Anwendung zum Erstellen von Bemerkungen; und/oder
eine Firmenverwaltungsanwendung; und/oder
eine Nachrichtenanwendung; und/oder
eine Textverarbeitungsanwendung; und/oder
eine Tabellenkalkulationsanwendung; und/oder
eine Datenbankanwendung; und/oder
eine Präsentationsanwendung; und/oder
eine Kontaktanwendung; und/oder
eine Kalenderanwendung.

8. System, mit:
einer Anwendung (1220), die zumindest teilweise durch eine Recheneinrichtung (102) ausgeführt wird, wobei die Recheneinrichtung umfasst:
mindestens einen Prozessor (1202);
einen Speicher (1210) zum Aufnehmen von computerausführbaren Befehlen, die bei Ausführen durch den mindestens einen Prozessor bewirken, dass die Recheneinrichtung ein Verfahren ausführt, mit:
Anordnen, im Wesentlichen nebeneinander, von mehreren Gebieten aus Anwendungsfunktionen und Informationen zur Anzeige innerhalb eines zugewiesenen Bereichs einer Benutzerschnittstelle;
Berechnen einer Pixelgröße für jedes Gebiet der mehreren Gebiete aus Anwendungsfunktionen und Informationen für die Anzeige;
Aufsummieren, aus der Berechnung der Pixelgröße für jedes Gebiet, von Pixelbeträgen, um eine Gesamtpixelgröße zu ermitteln;
Ermitteln eines Betrages an verfügbarem Platz in der Benutzerschnittstelle innerhalb des zugewiesenen Bereichs der Benutzerschnittstelle;
Vergleichen der Gesamtpixelgröße mit der Größe des verfügbaren Platzes; und
Einstellen einer visuellen Anzeige mindestens eines der mehreren Gebiete aus Anwendungsfunktionen und Informationen gemäß einer oder mehrerer vorbestimmter Skalierungsprioritäten auf der Grundlage des Vergleichs, um den verfügbaren Platz in dem zugewiesenen Bereich der Benutzerschnittstelle aufzunehmen, wobei die Skalierungsprioritäten die Anwendung anweisen, eine Reihe von Abschneideoperationen an einem ersten Gebiet der mehreren Gebiete aus Anwendungsfunktionen und Informationen bis zu einem ersten minimalen Schwellwert auszuführen, bevor eine Abschneideoperation an einem zweiten Gebiet der mehreren Gebiete aus Anwendungsfunktionen und Informationen ausgeführt wird.

9. System nach Anspruch 8, wobei das Ermitteln umfasst:
Berechnen einer verfügbaren Benutzerschnittstellenbreite oder -höhe durch Ermitteln einer Anzahl an Pixel, die in der Breite und/oder der Höhe des verfügbaren Platzes verfügbar sind.

10. Computerlesbares Speichermedium mit computerausführbaren Befehlen, die darin gespeichert sind, die, wenn sie von einem Rechensystem für eine Anwendung ausgeführt werden, bewirken, dass das Rechensystem ein Verfahren zum Anzeigen einer Benutzerschnittstelle ausführt, wobei das Verfahren umfasst:
Anordnen (202), im Wesentlichen nebeneinander, von mehreren Gebieten aus Anwendungsfunktionen und Informationen zur Anzeige innerhalb eines zugewiesenen Bereichs einer Benutzerschnittstelle;
Berechnen einer Pixelgröße für jedes Gebiet der mehreren Gebiete aus Anwendungsfunktionen und Informationen für die Anzeige;
Aufsummieren, aus der Berechnung der Pixelgröße für jedes Gebiet, von Pixelbeträgen, um eine Gesamtpixelgröße zu ermitteln;
Ermitteln (204) eines Betrages an verfügbarem Platz in der Benutzerschnittstelle innerhalb des zugewiesenen Bereichs der Benutzerschnittstelle;
Vergleichen (206) der Gesamtpixelgröße mit der Größe des verfügbaren Platzes; und
Einstellen (208) einer visuellen Anzeige mindestens eines der mehreren Gebiete aus Anwendungsfunktionen und Informationen gemäß einer oder mehrerer vorbestimmter Skalierungsprioritäten auf der Grundlage des Vergleichs, um den verfügbaren Platz in dem zugewiesenen Bereich der Benutzerschnittstelle aufzunehmen, wobei die Skalierungsprioritäten die Anwendung anweisen, eine Reihe von Abschneideoperationen an einem ersten Gebiet der mehreren Gebiete aus Anwendungsfunktionen und Informationen bis zu einem ersten minimalen Schwellwert auszuführen, bevor eine Abschneideoperation an einem zweiten Gebiet der mehreren Gebiete aus Anwendungsfunktionen und Informationen ausgeführt wird.

## Revendications

1. Procédé comprenant les étapes consistant à :
agencer (202) de multiples régions de fonctionnalités et d'informations d'application pour un affichage sensiblement en ligne dans une zone désignée d'une interface utilisateur ;
calculer une taille de pixel pour chaque région des multiples régions de fonctionnalités et d'informations d'application pour affichage ;
sommer, à partir du calcul de la taille de pixel pour chaque région, des quantités de pixel pour identifier une taille de pixels totale ;
identifier (204) une quantité d'un espace disponible pour l'interface utilisateur dans la zone désignée de l'interface utilisateur ;
comparer (206) la taille de pixels totale à la quantité de l'espace disponible ; et
ajuster (208) un affichage visuel d'au moins une des multiples régions de fonctionnalités et d'informations d'application en fonction d'une ou plusieurs priorités de dimensionnement prédéterminées sur la base de la comparaison pour loger l'espace disponible dans la zone désignée de l'interface utilisateur, dans lequel les priorités de dimensionnement demandent à l'application d'effectuer une série d'opérations de troncature sur une première région des multiples régions de fonctionnalités et d'informations d'application jusqu'à un premier seuil minimum avant d'effectuer une opération de troncature sur une seconde région des multiples régions de fonctionnalités et d'informations d'application.

2. Procédé selon la revendication 1, dans lequel l'agencement comprend :
l'agencement d'un affichage en ligne d'au moins deux régions parmi une région d'informations, une région de commande de ruban, une région d'informations de document, une région de recherche, une région de synchronisation et une région de commande rapide.

3. Procédé selon la revendication 1, dans lequel l'identification comprend :
le calcul d'une largeur ou hauteur d'interface utilisateur disponible en déterminant un nombre de pixels disponibles dans une ou plusieurs parmi la largeur ou la hauteur de l'espace disponible.

4. Procédé selon la revendication 1, dans lequel l'ajustement comprend :
l'application d'une hiérarchie de troncature à une ou plusieurs des multiples régions de fonctionnalités et d'informations d'application, la hiérarchie de troncature identifiant si une région doit changer de taille, affiche à la fois une représentation graphique et une représentation textuelle, ou affiche uniquement l'une parmi une représentation graphique et une représentation textuelle ;
effectuer au moins une opération de troncature sur au moins une parmi la région d'informations de document et une région fonctionnelle jusqu'à ce que la au moins une opération de troncature soit suffisante pour adapter l'interface utilisateur dans l'espace disponible,
dans lequel l'exécution de la au moins une opération de troncature sur au moins l'une parmi la région fonctionnelle et la région d'informations de l'interface utilisateur comprend :
l'élimination d'un texte associé à une ou plusieurs icônes fonctionnelles, et affiché à proximité adjacente de celles-ci.

5. Procédé selon la revendication 1, dans lequel l'ajustement comprend :
l'application d'une hiérarchie de troncature à une ou plusieurs des multiples régions de fonctionnalités et d'informations d'application, la hiérarchie de troncature identifiant si une région doit changer de taille, affichage à la fois une représentation graphique et une représentation textuelle, ou affiche uniquement l'une parmi une représentation graphique et une représentation textuelle ; et
la troncature de la région de commande de ruban en un élément de commutation servant de point d'entrée à une fonctionnalité de commande de ruban.

6. Procédé selon la revendication 1, dans lequel le dispositif d'affichage comprend au moins l'un parmi :
un dispositif mobile ;
un dispositif intelligent ;
une tablette ;
une montre intelligente ;
un ordinateur portable ;
un ordinateur personnel ;
un ordinateur de bureau ; et
un ordinateur portatif.

7. Procédé selon la revendication 1, dans lequel l'application est au moins l'une parmi :
une application de courrier électronique ;
une application de réseau social ;
une application de collaboration ;
une application de prise de notes ;
une application de gestion d'entreprise ;
une application de messagerie ;
une application de traitement de texte ;
une application de tableur ;
une application de base de données ;
une application de présentation ;
une application de contacts ; et
une application d'agenda.

8. Système comprenant :
une application (1220) exécutée au moins en partie par un dispositif informatique (102), le dispositif informatique comprenant :
au moins un processeur (1202) ;
une mémoire (1210) destinée à contenir des instructions exécutables par ordinateur, qui, lorsqu'elles sont exécutées par le au moins un processeur, amènent le dispositif informatique à effectuer un procédé comprenant les étapes consistant à :
agencer de multiples régions de fonctionnalités et d'informations d'application pour un affichage sensiblement en ligne dans une zone désignée de l'application ;
calculer une taille de pixel pour chaque région des multiples régions de fonctionnalités et d'informations d'application pour affichage ;
sommer, à partir du calcul de la taille de pixel pour chaque région, des quantités de pixel pour identifier une taille de pixels totale ;
identifier une quantité d'un espace disponible pour une interface utilisateur dans la zone désignée de l'application ;
comparer la taille de pixels totale à la quantité de l'espace disponible ; et
ajuster un affichage visuel d'au moins une des multiples régions de fonctionnalités et d'informations d'application en fonction d'une ou plusieurs priorités de dimensionnement prédéterminées sur la base de la comparaison pour loger l'espace disponible dans la zone désignée de l'application, dans lequel les priorités de dimensionnement demandent à l'application d'effectuer une série d'opérations de troncature sur une première région des multiples régions de fonctionnalités et d'informations d'application jusqu'à un premier seuil minimum avant d'effectuer une opération de troncature sur une seconde région des multiples régions de fonctionnalités et d'informations d'application.

9. Système selon la revendication 8, dans lequel l'identification comprend :
le calcul d'une largeur ou hauteur d'interface utilisateur disponible en déterminant un nombre de pixels disponibles dans une ou plusieurs parmi la largeur ou la hauteur de l'espace disponible.

10. Support de stockage lisible par ordinateur comprenant des instructions exécutables par ordinateur stockées sur celui-ci qui, lorsqu'elles sont exécutées par un système informatique pour une application, amènent le système informatique à effectuer un procédé d'affichage d'une interface utilisateur comprenant les étapes consistant à :
agencer (202) de multiples régions de fonctionnalités et d'informations d'application pour un affichage sensiblement en ligne dans une zone désignée de l'application, dans lequel l'agencement comprend l'affichage d'au moins deux régions parmi une région d'informations, une région de commande de ruban, une région d'informations de document, une région de recherche, une région de synchronisation et une région de commande rapide dans une rangée dans une zone désignée pour l'interface utilisateur ;
calculer une taille de pixel pour chaque région des multiples régions de fonctionnalités et d'informations d'application pour affichage ;
sommer, à partir du calcul de la taille de pixel pour chaque région, des quantités de pixel pour identifier une taille de pixels totale ;
identifier (204) une quantité d'un espace disponible pour l'interface utilisateur dans la zone désignée de l'application ;
comparer (206) la taille de pixels totale des multiples régions à la quantité de l'espace disponible ; et
ajuster (208) un affichage visuel d'au moins une des multiples régions de fonctionnalités et d'informations d'application en fonction d'une ou plusieurs priorités de dimensionnement prédéterminées sur la base de la comparaison pour loger l'espace disponible dans la zone désignée de l'application, dans lequel les priorités de dimensionnement demandent à l'application d'effectuer une série d'opérations de troncature sur une première région des multiples régions de fonctionnalités et d'informations d'application jusqu'à un premier seuil minimum avant d'effectuer une opération de troncature sur une seconde région des multiples régions de fonctionnalités et d'informations d'application.
